# EUROPEAN PATENT SPECIFICATION

(11) **EP 2 282 599 B1**
(45) Date of publication and mention of the grant of the patent: **08.05.2013**
(21) Application number: 10170836.0
(22) Date of filing: 26.07.2010
(51) Int. Cl.: H04W 74/08

(54) **Method for the access to a shared communication channel for wireless communication networks**
Verfahren zum Zugriff auf einen gemeinsamen Kommunikationskanal für drahtlose Kommunikationsnetzwerke
Procédé pour l'accès à un canal de communication partagé pour des réseaux de communication sans fil

(30) Priority: 27.07.2009 IT TO20090568
(43) Date of publication of application: 09.02.2011
(73) Proprietor: Istituto Superiore Mario Boella Sulle Tecnologie dell'Informazione e Delle Telecomunicazioni, Torino (IT)
(72) Inventor: Scopigno, Riccardo, 15060, Vignole Borbera (IT)
(74) Representative: Camolese, Marco

(56) References cited:
- EP-A- 1 638 255
- US-A- 4 707 829
- US-A1- 2002 154 653
- BORGONOVO F ET AL: "ADHOC MAC: a new, flexible and reliable MAC architecture for ad-hoc networks" WCNC 2003 - IEEE WIRELESS COMMUNICATIONS AND NETWORKING CONFERENCE, NEW ORLEANS, LA, USA LNKD- DOI:10.1109/WCNC.2003.1200502, vol. 2, 16 March 2003 (2003-03-16), pages 965-970, XP010639898 ISBN: 978-0-7803-7700-4
- ANONYMOUS ED - ANONYMOUS: "IEEE Standard for Information technology-Telecommunications and information exchange between systems-Local and metropolitan area networks-Specific requirements - Part 11: Wireless LAN Medium Access Control (MAC) and Physical Layer (PHY) Specifications; IEEE Std 802.11-2007 (Revision of IEEE Std 802." IEEE STANDARD; [IEEE STANDARD], IEEE, PISCATAWAY, NJ, USA, 12 June 2007 (2007-06-12), pages C1-1184, XP017601788 ISBN: 978-0-7381-5656-9
- KANODIA V ET AL: "DISTRIBUTED PRIORITY SCHEDULING AND MEDIUM ACCESS IN AD HOC NETWORKS" WIRELESS NETWORKS, ACM, 2 PENN PLAZA, SUITE 701 - NEW YORK USA LNKD- DOI:10.1023/A:1016538128311, vol. 8, no. 5, 1 September 2002 (2002-09-01), pages 455-466, XP001131427 ISSN: 1022-0038

## Description

The present invention relates to a method for accessing a shared communication channel for communication networks.

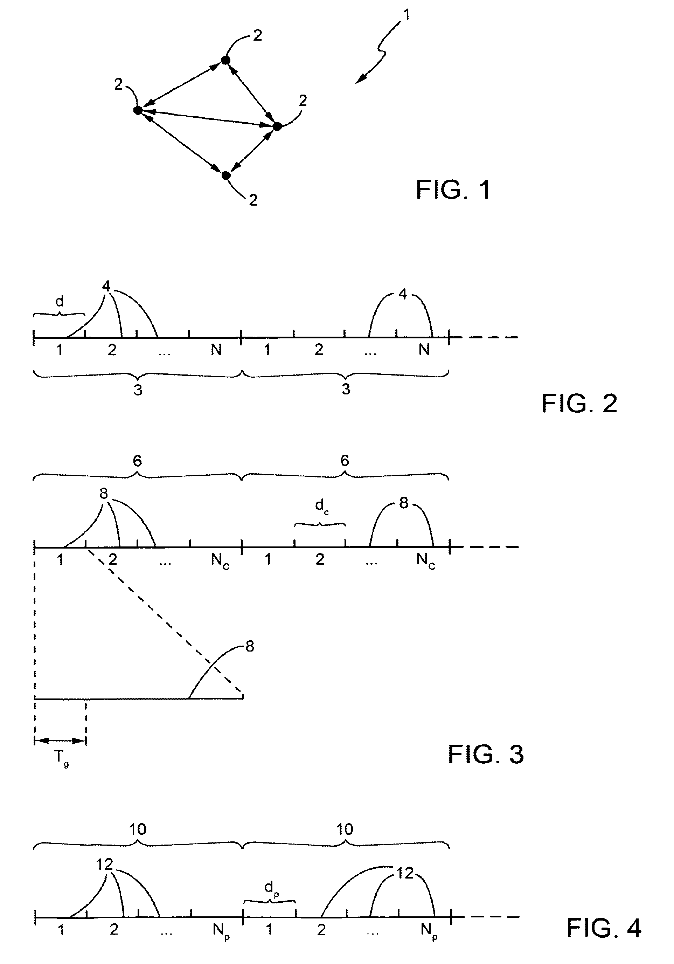

As is known, given a communication network 1 formed by a plurality of nodes 2 (Figure 1) and given a physical medium (not illustrated) that connects together said nodes 2 defining a communication channel with a certain capacity, there are so far available the so-called "channel-access protocols", i.e., protocols that enable the nodes 2 to communicate with one another through the communication channel, sharing the capacity thereof. Channel-access protocols are also known as "medium-access protocols".

In conformance with the known layered International Standard Organization - Open Systems Interconnection (ISO-OSI) model, said channel-access protocols belong to the so-called "data-link layer", also known as "layer two". More precisely, said channel-access protocols belong to a sublayer of layer two, known as "media-access control (MAC) sublayer". Since the channel-access protocols come under the so-called MAC sublayer, they are also referred to, for reasons of brevity, as "MAC protocols".

In greater detail, in order to communicate, the nodes 2 access the communication channel, i.e., transmit signals (typically, electrical or electromagnetic signals) through the communication channel. Said signals convey information.

In general, it is common to refer to the information transmitted by the nodes 2 as "data packets", or else, for reasons of brevity, simply as "packets". Channel-access protocols envisage control of the accesses of the nodes 2 and, in particular, the sending of the packets in order to optimize exploitation of the capacity of the communication channel and reduce the likelihood of occurrence of collisions, i.e., interference between signals transmitted by different nodes 2.

Amongst the MAC protocols so far known, there are present some particular protocols that enable, typically in an implicit way, assignment to each node 2 of a respective priority level. In other words, said particular protocols ensure that access to the communication channel by each node occurs according to the respective priority level in such a way that nodes having high priority levels are favoured in access to the communication channel as compared to nodes having low priority levels, thus enabling implementation, for example, of mechanisms of quality of service (QoS) of a deterministic type, or else implementing so-called "classes of priority service" (CoS).

By way of example, the so-called "time-division multiple access" (TDMA) protocol is known, which finds extensive use both in the case of communication networks and in the case of wireless communication networks.

The TDMA protocol envisages that the nodes 2 of the communication network 1 have respective MAC addresses and are to a first approximation synchronized, for example by means of use of the global positioning system (GPS). Furthermore, the TDMA protocol envisages that the communication channel is of the type divided into elementary time slots, i.e., of the so-called "time-slotted" type. In fact, as illustrated in detail in Figure 2, the TDMA protocol envisages definition in time of a succession of communication frames 3, each communication frame being in turn formed by a number N of consecutive time slots 4 of equal duration d, inside which the nodes 2 can transmit. In particular, typically within a single time slot 4 (also referred to simply as "slot"), a single node 2 can communicate.

To prevent occurrence of collisions, i.e., to prevent two nodes 2 from transmitting respective packets in one and the same slot 4, with consequent interference and loss of information, the TDMA protocol envisages that the nodes 2 are co-ordinated (typically, by a master node) in such a way as to establish, for each considered slot 4, a corresponding node 2, which has the right to transmit an own packet in the considered slot 4. In other words, given a considered communication frame 3, N associations are established beforehand between the slots 4 of the considered communication frame and N corresponding nodes 2. In other words still, each slot 4 is reserved to the corresponding node 2. Typically, the associations are established by a central node. Moreover, generally the associations established are maintained valid also for the subsequent communication frames.

Operatively, associating a given slot to a given node 2 means that, during the given slot, the given node 2 has maximum priority level, whilst the other nodes 2 have zero priority level, not being legitimated to transmit. Furthermore, according to the TDMA protocol, it is possible to associate to one and the same node 2 a number of slots 4, which is equivalent to increasing the priority level of the node 2 itself with respect to the other nodes 2.

The TDMA protocol hence enables division in a deterministic way of the band of the communication channel between the nodes 2. However, in the case where one or more nodes 2 do not transmit any packet during the corresponding slot 4, there is a lack of exploitation of the communication channel, unless mechanisms of reassignment are implemented. In other words, the introduction of the priority levels introduces the possibility of the transmission capacity of the communication channel not being exploited in an optimal way.

Once again by way of example, and with particular reference to the case of wireless communication networks, likewise known is the so-called Enhanced Distributed-Channel Access (EDCA), which is defined in the IEEE 802.11e standard. The EDCA protocol represents a variant of the known Carrier-Sense Multiple-Access/Collision-Avoidance (CSMA/CA) protocol, which is used, amongst other things, by the standards of the IEEE 802.11 family, commonly known as Wi-Fi/WLAN standards.

In particular, according to the EDCA protocol, the communication channel is not divided into elementary time slots. Furthermore, at each considered time instant the communication channel has a state; said state is free if, during the considered time instant, no node 2 is transmitting; otherwise, it is busy.

In detail, when a sender node from among the nodes 2 of the communication network 1 has traffic (information) to be transmitted, it detects the state of the communication channel for a first time interval. In the case where the state is free, i.e., in the case where no node 2 has transmitted during the first time interval, the sender node detects the state of the communication channel for a second time interval, and subsequently, in the case where the state is free also during the second time interval, accesses the communication channel, i.e., transmits a new packet. Instead, in the case where the sender node detects a transmission by another node 2 during the first or second time interval, it refrains from transmitting and starts again to detect the state of the communication channel, iterating the operations described.

The EDCA protocol moreover envisages that, following upon reception of any packet by a receiver node from among the nodes 2 of the communication network 1, the receiver node possibly sends a packet for acknowledging reception of the packet, generally known as ACK packet. Consequently, to verify the correctness of transmission of the new packet, the sender node waits, after having transmitted the new packet, to receive a corresponding ACK packet. In the case where the sender node receives the corresponding ACK packet within a preset time, it considers the new packet as having been correctly transmitted; otherwise, the sender node deduces that a collision has occurred. In this case, the sender node iterates the operations previously described in order to retransmit the new packet.

According to the EDCA protocol, the nodes 2 have available, following upon an initial configuration step, four different priority levels. Furthermore, each node 2 discriminates the traffic that it has generated on the basis of the type of traffic. In practice, whenever the nodes 2 have traffic to be transmitted, they assign to said traffic to be transmitted one of the four priority levels, on the basis of the type of traffic.

In addition, and once again with reference to the sender node, the durations of the first and second time intervals, in addition to possible subsequent time intervals, in which the sender node detects the state of the communication channel, depend upon the priority level assigned to the traffic to be transmitted generated by said sender node, as described in greater detail in the IEEE 802.11e standard.

Operatively, the durations of the aforementioned first and second time intervals are determined in such a way as to favour, in probabilistic terms, access to the communication channel by nodes 2 having high priority levels. In particular, the duration of the first time interval is formed by a fixed contribution, whilst the duration of the second time interval is formed by a random contribution. The fixed contribution is the smaller, the higher the priority level of the sender node, whereas the random contribution is extracted in a pseudo-random way within a window, the limits of which also depend upon the priority level of the sender node. In other words, given, for example, a communication network comprising a first node generating traffic with high priority level, and a second node generating traffic with low priority level, it is likely that the time intervals in which the first node detects the state of the communication channel (and hence refrains from transmitting) have a longer duration than corresponding time intervals for the second node.

The EDCA protocol hence enables implementation of mechanisms of priority assignment also in the case of a non-time-slotted communication channel. Furthermore, the EDCA protocol enables transmission in different ways of traffic of different types, favouring some types of traffic over others. Once again, like the CSMA/CA protocol, also the EDCA protocol enables automatic reassignment of the band, enabling efficient transmission also of the low-priority traffic, in the absence of high-priority traffic. However, the EDCA protocol does not enable division in a preset way of the band of the communication channel among the nodes.

The European patent application No. EP1638255 describes, instead, a wireless communication system in which the priority levels are modified dynamically according to the traffic exchanged on the communication channel in order to guarantee an even use of said communication channel by the nodes. In particular, the wireless communication system described therein envisages the presence of a base station, which, in order to modify the priority levels of the nodes dynamically, periodically transmits extended beacons. Operatively, said communication system enables use of the communication channel in an fair way, but requires the presence of the base station, and subordinates assignment of the priority levels to the traffic.

Further communications methods are disclosed in US4, 707,829 and US2002/154653. In particular US4,707,829 discloses a Carrier-Sense Multiple-Access/Collision-Detection (CSMA/CD) protocol, wherein each station has a priority that changes dynamically with the state of the system. US2002/0154653 discloses a random medium access method with backoff adaptation to the traffic.

A different approach is proposed in "ADHOC MAC: a new flexible and reliable MAC architecture for ad-hoc networks", of F. Borgonovo et al., 16 March 2003, which provides for a distributed access technique based on a slotted channel, and wherein the nodes distribute their views of the state of each slot of a communications frame, so as to provide slot information and acknowledgement for any transmission on the channel.

A still different approach is proposed in "Distributed priority scheduling and medium access in ad hoc networks", of V. Kanodia et al., Wireless Networks 8, 455-466, 01 September 2002, according to which each packet has an associated priority index which can be computed with local information, the priority index of each packet depending on the traffic locally queued by the node which transmits the packet.

Finally, further details relating to medium access protocols for wireless local area networks in general may be found on "IEEE Standard for Information technology - Telecommunications and information exchange between systems - Local and metropolitan area networks - Specific requirements - Part 11: Wireless LAN Medium Access Control (MAC) and Physical Layer (PHY) Specifications; IEEE Std 802.11-2007 (Revision of IEEE Std 802), 12 June 2007.

The aim of the present invention is to provide a method for accessing a shared communication channel for communication networks that will overcome at least in part the drawbacks of the known art.

According to the invention a method for accessing a shared communication channel, a node for communication network, a communication network, and a software product are provided as defined in claims 1, 17, 18, and 19, respectively.

In particular, the present method envisages defining a succession of priority time frames, each formed by a succession of priority slots. Furthermore, the present method envisages, in each priority slot, associating to each node a respective priority index. Once again, each node detects a state of the communication channel during a detection time interval, which is a function of a respective priority index. Next, if the state detected during the detection time interval is free, the node accesses the communication channel, transmitting a data packet.

For a better understanding of the invention, embodiments thereof are now described, purely by way of non-limiting example and with reference to the attached drawings, wherein:
- Figure 1 shows an example of communication network;
- Figure 2 is a schematic illustration of a succession of frames according to the TDMA protocol;
- Figure 3 is a schematic illustration of a succession of communication frames according to one embodiment of the present method;
- Figure 4 is a schematic illustration of a succession of priority frames according to one embodiment of the present method;
- Figures 5a-5c show time plots of priority levels assigned to three different nodes during two successive priority frames;
- Figure 6 shows a further example of communication network;
- Figures 7, 9 and 10 show flowcharts of operations according to exemplary embodiments of the present method; and
- Figure 8 is a schematic illustration of a time window and an extraction window according to the present method.

The present accessing method is described in what follows with reference, by way of example, to the communication network 1 illustrated in Figure 1, except where otherwise specified.

In detail, defined according to a first embodiment of the present accessing method is a succession of communication frames, illustrated in Figure 3 and designated by 6, each communication frame 6 being formed by a number N_{c} of slots 8, having duration d_{c} and referred to hereinafter as "communication slots" 8; in practice, a communication slot is a time interval in which, as described hereinafter, transmission of a packet by a single node can occur. Furthermore, a succession of priority frames 10 is defined (Figure 4), each priority frame 10 being formed by a number Nₚ of priority slots 12 having duration dₚ.

The communication frames 6 and the priority frames 10 are synchronous. In particular, each priority frame 10 is temporally aligned, i.e., simultaneous, to a respective communication frame 6. Furthermore, the number Nₚ of priority slots 12 of each priority frame 10 is preferably equal to the number N_{c} of communication slots 8 of each communication frame 6 in such a way that the communication slots 8 and the priority slots 12 have the same duration, and each communication slot 8 is temporally aligned to a corresponding priority slot 12. In addition, the successions of communication frames 6 and the successions of priority frames 10 are shared in a distributed way by the nodes 2. In other words, the present method envisages that the nodes 2 are synchronized and that they can identify in an autonomous way the instants of start and end of each priority slot 12, without any need to resort to a base station.

To each node 2 of the communication network 1 there is thus assigned, for each priority slot 12, a respective priority level. By way of example, the assignments of the priority levels to the nodes 2 can be established and notified to the nodes 2 before the start of the operations of the nodes 2 themselves, and remain valid up to the end of the operations of the nodes 2 or in any case up to the moment in which an assignment of new priority levels to the nodes 2 is made. Furthermore, before assigning the priority levels, it is possible to share the band of the communication channel between the nodes 2, assigning to each node 2 a respective fraction of band, for example proportional to the importance of the respective node 2.

In detail, for each priority slot 12, assigned to each node 2 is a respective priority level. Consequently, considering a single node 2, the priority levels assigned thereto can change only at a transition between two different priority slots 12.

In greater detail, the assignment of the priority levels to the nodes 2 implies that, considering a single node between the nodes 2, the priority levels assigned thereto define in time a succession of priority levels.

Preferably, the priority levels are assigned to the nodes 2 in such a way that, given a single node between the nodes 2, the priority levels assigned thereto define in time a periodic succession of priority levels. In other words, the priority level assigned to the single node 2 for a priority slot i is preferably equal to the priority level assigned to the single node 2 for the priority slots i + z.Nₚ, with z = 1, 2,... Still in other words, assigned to the single node 2 are Nₚ priority levels, i.e., as many priority levels as are the priority slots 12 of a single priority frame 10. Consequently, at each priority frame 10, assigned to the single node 2 are always the respective Nₚ priority levels, each of which is valid for a corresponding priority slot 12. In this way, it is sufficient to notify to each node 2 only Nₚ priority levels. In what follows, the case where the priority levels are assigned so as to define periodic successions is referred to as "case of periodic assignment".

The assignment of the priority levels to each node 2 can be made as a function of the respective fraction of band. For example, in the case of periodic assignment, it is possible to determine, for each node 2, the respective Nₚ priority levels as a function of the respective fraction of band, in a way in itself known.

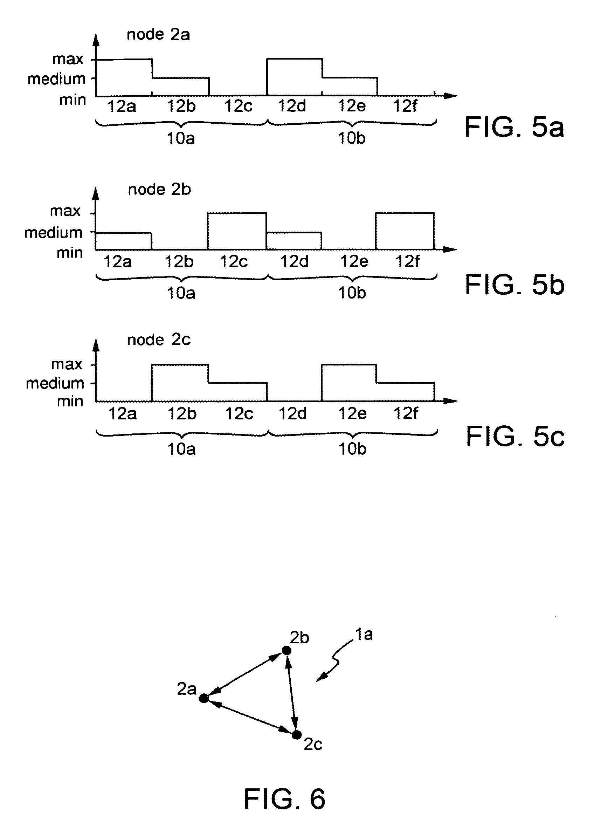

Purely by way of example, Figures 5a-5c show the time plots of the priority levels (identified qualitatively as maximum, medium, minimum) respectively assigned to three nodes 2a, 2b, 2c forming part of a communication network 1a, illustrated in Figure 6. In detail, Figures 5a-5c show the priority levels assigned to the three nodes 2a, 2b, 2c during a first priority frame 10a and a second priority frame 10b; in particular, the first priority frame 10a comprises first three priority slots, designated by 12a, 12b and 12c, whilst the second priority frame 10b comprises a further three priority slots, designated by 12d, 12e and 12f. In this example, it is hence assumed that the number Nₚ of the priority slots 12 is equal to three.

Once again with reference to Figures 5a-5c, it may be noted how, during the priority slots 12a-12c, the node 2a has priority levels that are, respectively, maximum, medium, and minimum; in the same priority slots 12a-12c, the node 2b has priority levels that are, respectively, medium, minimum and maximum, whilst the node 2c has priority levels that are, respectively, minimum, maximum, and medium. As regards, instead, the priority slots 12d-12f, the node 2a has priority levels that are, respectively, maximum, medium, and minimum; moreover, the node 2b has priority levels that are, respectively, medium, minimum, and maximum, whilst the node 2c has priority levels that are, respectively, minimum, maximum, and medium. In practice, in this example, the band of the communication channel is fairly distributed between the nodes 2a, 2b, 2c.

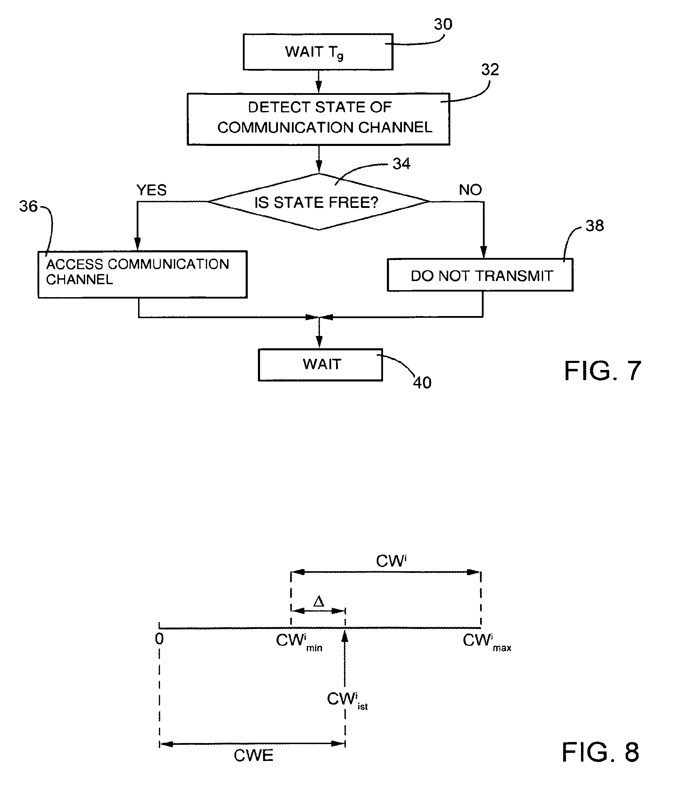

Given this, according to the first embodiment of the present accessing method, access to a considered communication slot 8 by a considered node 2, having information to be transmitted, occurs according to the operations illustrated in Figure 7.

In particular, starting from the start of the considered communication slot 8, the considered node 2 waits (block 30) for a guard time T_{g} (Figure 3), during which it detects (block 32) the state of the communication channel. Next, the node 2 considered verifies (block 34) the detected state. In particular, in the case where the considered node 2 has detected the free state for the entire duration of the guard time T_{g} (output YES from block 34), it accesses the communication channel (block 36); otherwise, the considered node 2 refrains from transmitting (block 38). In either case, the considered node 2 waits for start of a subsequent communication slot 8 (block 40), and then iterates the operations of blocks 30-40.

The duration of the guard time T_{g} is a function of the priority level that the considered node 2 has during the priority slot 12 that corresponds to the considered communication slot 8. Consequently, in different communication slots 8, the considered node 2 will have to wait (block 30) for guard times T_{g} that differ from one another, given that in the corresponding priority slots 12 the considered node 2 may have different priority levels. In particular, high priority levels involve shorter guard times T_{g}, whereas low priority levels involve longer guard times T_{g}.

It should moreover be noted that the minimum duration of the guard time T_{g} can be zero, so that, in the case where the considered node 2 has the maximum priority level among the priority levels assigned to the nodes 2, it can access the communication channel without waiting.

Furthermore, assuming that between any two nodes 2 of the communication network 1 there may be a distance not greater than a maximum distance Dₘₐₓ, and assuming that a signal transmitted by a node 2 takes a propagation time T_{d} to cover the maximum distance Dₘₐₓ, it is possible to determine the guard time T_{g} as a function of the propagation time T_{d}. In particular, assuming that the priority levels assigned to the nodes 2 are designated by an index k = 0, 1, 2, ..., which is inversely proportional to the priority level indicated, it is preferable for a generic node 2 having a priority level k to wait for a guard time T_{g} longer than or equal to k.T_{d}.

It should moreover be noted that, assuming that K different priority levels are possible, namely that k is comprised between 0 and K-1, and assuming that the packets have a maximum duration Tₘₐₓ, the duration d_{c} of each communication slot 8 can be set equal to (K-1)·T_{d} + Tₘₐₓ so as to guarantee that the packets are each transmitted within a single communication slot 8. Moreover possible are embodiments in which the nodes with high priority levels can transmit packets longer than the packets that can be transmitted by nodes having low priority levels. Moreover possible are embodiments that adapt the length of each packet as a function of the duration of the communication slots 8.

Once again with reference to the example illustrated in Figures 5a-5c and 6, in a hypothetical communication slot 8 to which the priority slot 12a corresponds, the node 2a waits a first guard time T_{g} having a minimum duration, preferably zero, and subsequently transmits, if it has information to be transmitted. The node 2b waits a second guard time T_{g} having a medium duration, at the end of which, if it has information to be transmitted and if the node 2a has not transmitted, it transmits. As regards, instead, the node 2c, it waits a third guard time T_{g} having maximum duration, at the end of which, if it has information to be transmitted and if neither the node 2a nor the node 2b have transmitted, transmits. In the next communication slots 8, the guard times T_{g} for which the nodes 2a-2c wait vary as a function of the respective priority levels.

In an exemplary embodiment of the present accessing method, no communication frame is defined, nor is recourse had to a communication channel of a time-slotted type. Consequently, the priority frames 10 are not synchronous with respect to corresponding communication frames 6, with the consequence that access to the communication channel by the nodes 2 can occur asynchronously with respect to the priority frames 10 themselves.

In the case of the exemplary embodiment, associated to each priority level are:
- a respective fixed time, designated in what follows as T_{f}ⁱ;
- a respective time window CWⁱ (Figure 8), comprised between a lower limit CWₘᵢₙⁱ and an upper limit CWₘₐₓⁱ; and
- a respective initial value CWᵢₛₜⁱ(0), said initial value CWᵢₛₜⁱ(0) being comprised between the lower limit CWₘᵢₙⁱ and the upper limit CWₘₐₓⁱ.

In particular, the fixed times T_{f}ⁱ are associated in such a way that higher priority levels involve shorter fixed times T_{f}ⁱ, and lower priority levels involve longer fixed times T_{f}ⁱ. Likewise, as described hereinafter, to high priority levels there can be associated lower and upper limits CWₘᵢₙⁱ, CWₘₐₓⁱ having low values, whereas to low priority levels there can be associated lower and upper limits CWₘᵢₙⁱ, CWₘₐₓⁱ having high values.

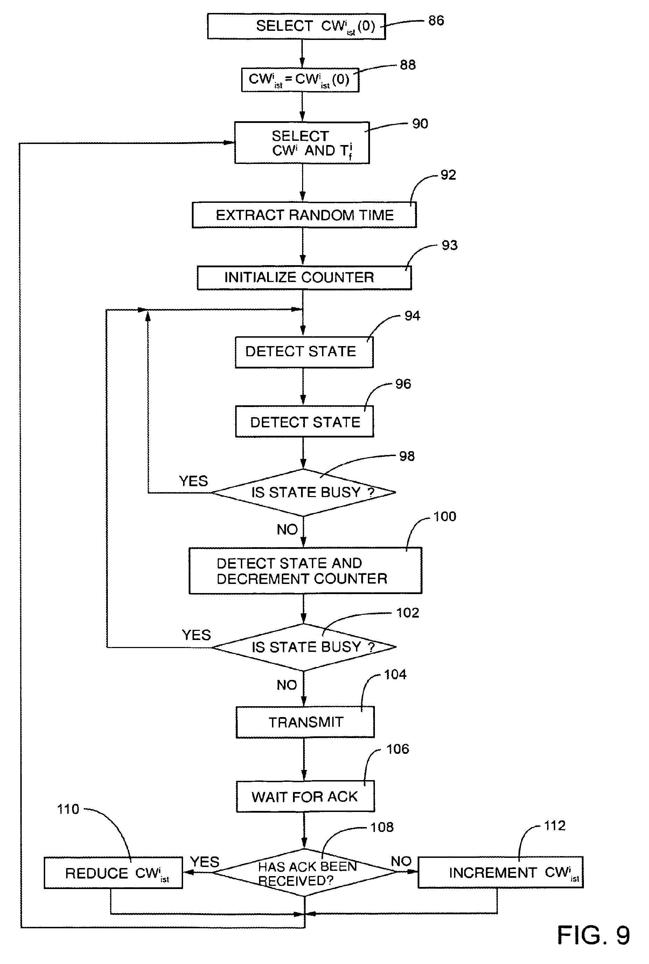

To access the communication channel, each node 2 that, at a considered instant of time t, generates information to be transmitted, said node being referred to hereinafter as "source node 2", performs the operations illustrated in Figure 9. In the ensuing description, it is assumed that the considered instant of time t in which the source node generates information to be transmitted falls within a transmission priority slot 12. Purely by way of example, the considered instant of time t can coincide with an instant of time in which the source node 2 determines, in a way in itself known, that a certain application has generated a packet ready for being transmitted.

In detail, the source node selects (block 86) the initial value CWᵢₛₜ¹(0) associated to the priority level assigned to the source node 2 in the transmission priority slot 12. Furthermore, the source node sets (block 88) an instantaneous limit CWᵢₛₜⁱ (Figure 8) equal to the initial value CWᵢₛₜⁱ(0).

Next, the source node selects (block 90) the time window CW¹ and the fixed time T_{f}¹ associated to the priority level assigned to the source node 2 in the transmission priority slot 12.

Next, the source node 2 extracts (block 92) in a pseudo-random way a random time, extracted from an extraction window CWE (Figure 8) which is comprised between zero and the instantaneous limit CWᵢₛₜ¹. The source node 2 then initializes (block 93) a counter so that it will indicate the random time extracted.

Next, the source node 2 executes continuously a first step of detection of the state of the communication channel (block 94). Execution of the first detection step ends when the free state is detected.

As soon as the state of the communication channel is free, the source node 2 executes continuously a second step of detection of the state of the communication channel (block 96). The second detection step ends alternatively when:
i) from the start of the operations of block 96, a time has elapsed equal to the selected fixed time T_{f}¹, without the busy state having been detected; or else
ii) the busy state is detected.

To discriminate between i) and ii), the source node 2 verifies (block 98) whether, during the operations of block 96, the busy state has been detected.

In the case where the source node 2 has detected the busy state (output YES from block 98), it starts again to perform the operations of block 94. Instead, if the second detection step has been executed for a time equal to the selected fixed time T_{f}ⁱ without the busy state having been detected, the source node 2 performs continuously a third step of detection (block 100) of the state of the communication channel. As the state of the communication channel is detected, the source node 2 decrements the counter.

The third detection step, and hence also the decrement of the counter, end alternatively when:
iii) the busy state is detected; or else
iv) the counter is reset, without the busy state having been detected.

To discriminate between iii) and iv), the source node 2 verifies (block 102) whether, during the operations of block 100, the busy state has been detected.

In the case where the source node 2 has detected the busy state (output YES from block 102, corresponding to iii)), and hence the decrement of the counter has stopped at a nonzero value, the source node 2 starts again to perform the operations of block 94. At the moment of iterating the operations of block 100, the source node 2 will start decrementing the counter again starting from the aforementioned nonzero value.

Instead, in the case where the counter has been reset without the busy state having been detected (output NO from block 102, corresponding to iv)), the source node 2 accesses the communication channel, transmitting (block 104) a first packet, addressed to an addressee node 2, which, in the event of reception of the first packet, performs the operations illustrated in Figure 9 for transmitting to the source node 2 a corresponding ACK packet.

After transmitting the first packet, the source node 2 waits (block 106) for a waiting time interval. Next, the source node 2 verifies (block 108) whether during the waiting time it has received the corresponding ACK packet.

If the corresponding ACK packet has been effectively received before the end of the waiting time (output YES from block 108), the source node 2 reduces (block 110) the instantaneous limit CWᵢₛₜ¹, and then iterates the operations described starting from the operations of block 90 in order to transmit, if necessary, a second packet. Otherwise (output NO from block 108), the source node 2 increments (block 112) the instantaneous limit CWᵢₛₜ¹, and then iterates the operations described, starting from the operations of block 90 in order to transmit the first packet again.

In greater detail, and purely by way of example, the operation of decrement made in block 110 can be performed by calculating the difference 0 (Figure 8) between the instantaneous limit CWᵢₛₜⁱ and the selected lower limit CWₘᵢₙ¹, halving said difference Δ, and setting the instantaneous limit CWᵢₛₜⁱ equal to the sum of the result of the division plus the lower limit CWₘᵢₙⁱ. Likewise, the operation of increment made in block 112 can be performed by calculating the difference Δ between the instantaneous limit CWᵢₛₜⁱ and the selected lower limit CWₘᵢₙⁱ, multiplying said difference Δ by two, and setting the instantaneous limit CWᵢₛₜⁱ equal to the maximum value between the upper limit CWₘₐₓⁱ and the sum of the result of the above multiplication plus the lower limit CWₘᵢₙⁱ.

It should be noted that according to said exemplary embodiment, as already mentioned previously, the priority frames 10 are asynchronous with respect to the transmissions by the nodes. Furthermore, assuming once again that the packets have maximum duration Tₘₐₓ, the duration dₚ of the priority slots 12 can be set at least equal to the maximum duration Tₘₐₓ.

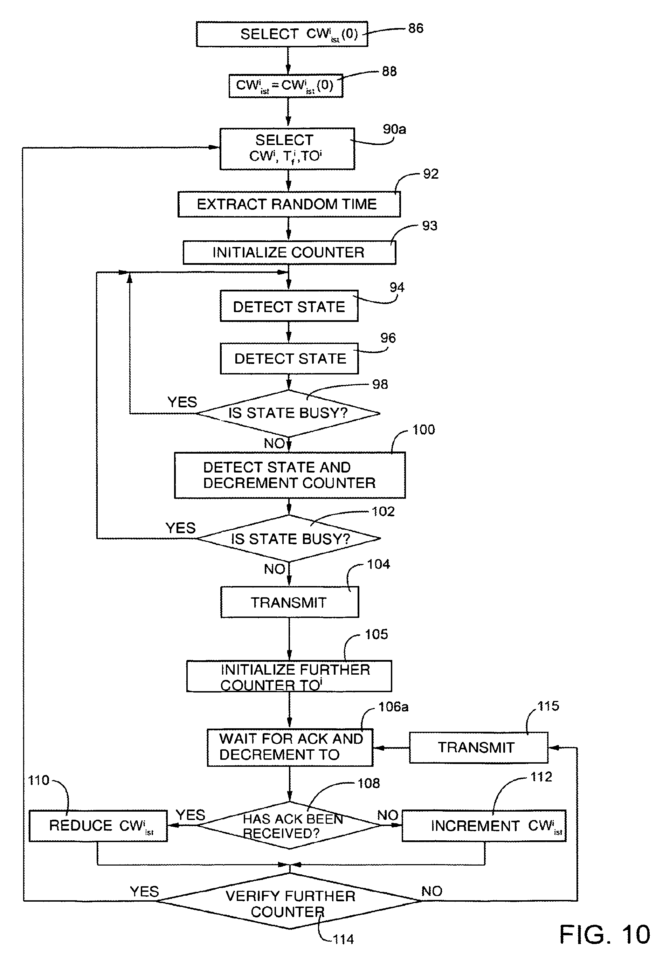

According to a variant of the exemplary embodiment, it is moreover possible to perform operations different from the ones described. In particular, it is possible to associate to each priority level a respective opportunity window TOⁱ. Furthermore, as illustrated in Figure 10, where blocks identical to corresponding blocks illustrated in Figure 9 are designated by the same numbers, it is possible to select (block 90a), after the operations of blocks 86-88, the opportunity window TOⁱ associated to the priority level assigned to the source node 2 in the transmission priority slot 12, in addition to the already mentioned time window CW¹ and to the fixed time T_{f}ⁱ.

Furthermore, after having transmitted the first packet (block 104), the source node 2 can initialize (block 105) a further counter at a value equal to the selected opportunity window TOⁱ. Next, the source node 2 performs the operations of block 106a, which comprise, in addition to waiting for the waiting time interval, decrementing simultaneously the further counter.

Once again, after having reduced (block 110) or incremented (block 112) the instantaneous limit CWᵢₛₜⁱ, the source node can verify (block 114) whether the further counter is zero, or else whether it is other than zero.

In the case where the further counter is other than zero (output NO from block 114), the source node 2 can once again access the channel (block 115), alternatively for transmitting the first packet, if the corresponding ACK packet has not been received, or else for transmitting a further packet; next, the source node 2 iterates the operations of block 106a and of the subsequent blocks.

In the case where, instead, the further counter is zero (output YES from block 114), the source node 2 iterates the operations described, starting from the operations of block 90a.

Operatively, the operations described involve that, once the source node 2 has gained access to the channel, it maintains a sort of pre-emption over the communication channel, being able to transmit packets without having to iterate the operations of blocks 90a-105. Said control is maintained for a time equal to the opportunity window TO¹ selected. Consequently, by associating opportunity windows TOⁱ with durations that are the longer, the higher the priority levels to which they are associated, the transmissions by the nodes 2 having high priority levels are favoured.

It is moreover possible to initialize (block 105) the further counter at a value different from the opportunity window TOⁱ selected. For example, assuming that access to the communication channel (block 104) occurs at an instant Tₐ, which falls within an access priority slot (not necessarily coinciding with the aforementioned transmission priority slot), it is possible to initialize the further counter at a value equal to T_{T}-Tₐ, where T_{T} is the moment (subsequent to the instant Tₐ) at which the source node 2 changes priority level with respect to the priority level assumed thereby at the instant Tₐ.

The advantages that the present accessing method affords emerge clearly from the foregoing discussion. In particular, the present method enables optimization of exploitation of the capacity of the communication channel, and simultaneously assignment to the nodes 2 of the communication network 1 of different priority levels. Furthermore, the present method enables minimization of the number of collisions, so increasing exploitation of the communication channel. In particular, assuming that associated to the communication channel is an available band, said available band is divided between the nodes 2 on the basis of the respective priority levels; moreover, the present method enables reassignment of the band assigned to nodes that do not transmit in favour of nodes having traffic to be transmitted.

In other words, the present method envisages management of the priority levels of the nodes on a time basis, and not on a traffic basis so as to prevent collisions between high-priority packets.

Furthermore, the present method is back-compatible with the layer-two protocols of a known type, such as for example the TDMA protocol, the CSMA/CA protocol, and the EDCA protocol. Once again, the present method can be applied both to networks of a wired type and to networks of a wireless type.

Finally, it is evident that modifications and variations may be made to the accessing method described, without thereby departing from the scope of the appended claims.

For example, the operations illustrated in Figures 9 and 10 can be performed in an order different from the one illustrated. Furthermore, the operations of blocks 110 and 112 are optional, it being possible not to modify the instantaneous limit CWᵢₛₜⁱ.

Furthermore, the operations of selection made in blocks 90 and 90a can be executed at an instant of time different from the aforementioned instant of time t considered, in which the source node 2 generates information to be transmitted.

## Claims

1. A method for accessing a shared communication channel of a communication network (1) formed by a plurality of nodes (2) connected by means of said communication channel, said method comprising a network-setting procedure and an operating procedure, the network-setting procedure including the steps of:
- defining a succession of priority frames (10), each priority frame being formed by a plurality of priority slots (12);
- for each priority slot, assigning to each node a respective priority level so as to define, for each node, a respective preset succession of priority levels ;
- defining a succession of communication frames (6), each communication frame being formed by a succession of communication slots (8), each communication slot being associated to a corresponding priority slot (12), wherein the successions of priority frames (10) are shared in a distributed way by said nodes (2), without any need to resort to a base station;
determining, for each node, a respective fraction of band, indicating a respective fraction of a transmission band associated to the communication channel; and wherein said step of assigning to each node a respective priority level comprises, for each priority slot, assigning to each node considered from among said nodes a respective priority level which is a function of the fraction of band determined for said considered node;
the operating procedure being subsequent to said network-setting procedure and including the steps of:
- detecting (32; 94, 96, 100), by a first node, a state of the communication channel during a detection time interval Tg, said time interval being a function of the priority level assigned to the first node, said state being alternatively free, in the case where the first node does not detect any transmission by other nodes, or busy, in the case where the first node detects transmission of at least one other node; and
- if the state detected during said detection time interval Tg is free, accessing (36; 104), by the first node, the communication channel, transmitting a data packet.

2. The accessing method according to claim 1 , wherein said step of assigning to each node, for each priority slot, a respective priority level comprises assigning to each node priority levels such that the respective preset succession of priority levels is periodic.

3. The accessing method according to any one of the preceding claims, wherein said detection time interval Tg elapses starting from an instant of start of a communication slot considered from among said communication slots, said transmission priority level assigned to the first node (2) being the priority level assigned to the first node in the priority slot which corresponds to the considered communication slot.

4. The accessing method according to Claim 3, wherein said communication frames (6) and said priority frames (10) are synchronous.

5. The accessing method according to Claim 4, wherein said communication frames (6) and said priority frames (10) have one and the same frame duration, and wherein each communication slot (8) is temporally aligned to the corresponding priority slot (12).

6. The accessing method according to any one of the preceding claims, wherein said detection time interval Tg is moreover a function of a propagation time corresponding to a maximum admissible distance between any two nodes from among said nodes (2).

7. The accessing method according to claim 6, wherein the duration of each communication slot (8) is a function of said propagation time and of a number of possible priority levels .

8. The accessing method according to claim 7, wherein said nodes (2) are configured for transmitting data packets having sizes not greater than a maximum size, and wherein the duration of each communication slot (8) is moreover a function of said maximum size.

9. The accessing method according to any one of claims 1-2, wherein said step of accessing (104) the communication channel is executed asynchronously with respect to the priority frames (10).

10. The accessing method according to claim 9, wherein said step of detecting (94, 96, 100) a state of the communication channel comprises the steps of:
- executing, by the first node (2), a first detection (96) of the state of the communication channel during a first time T_{f}ⁱ, said first time being a function of the transmission priority level assigned to the first node;
- extracting (92), in a pseudo-random way, a second time from a time window CWE, said time window CWE being a function of the transmission priority level assigned to the first node;
- executing (100), by the first node, a second detection of the state of the communication channel during said second time;
and wherein said step of accessing (104) the communication channel is executed in the case where the first node detects the free state both during the first time T_{f}ⁱ and during the second time.

11. The accessing method according to claim 10, further comprising the step of:
- waiting (106; 106a), by the first node (2), for an acknowledgement packet regarding the transmitted data packet.

12. The accessing method according to claim 11, further comprising the steps of:
- in the case where said acknowledgement packet is not received by the first node (2), increasing (112) the temporal duration of the time window CWE;
- in the case where said acknowledgement packet is received by the first node, reducing (110) the temporal duration of the time window CWE.

13. The accessing method according to any one of claims 9 to 12, wherein the step of detecting (94, 96, 100) the state of the communication channel is activated by a generation of the data packet, and wherein, if the state detected during the detection time interval is free, the step of determining an opportunity time interval TOⁱ and, in the case where a further data packet is generated within said opportunity time interval TO¹, transmitting the further data packet without detecting further the state of the communication channel is executed.

14. The accessing method according to claim 13, wherein said opportunity time interval TOⁱ is comprised between an instant of access to the communication channel, wherein the first node (2) accesses the communication channel, and an instant of modification of the priority level assigned to the first node.

15. The accessing method according to any one of claims 9 to 14, comprising the step of detecting by the first node (2) the presence of the data packet in a packet-ready instant; said transmission priority level assigned to the first node (2) being the priority level assigned to the first node in the packet-ready instant.

16. The accessing method according to any one of claims 9 to 15, wherein said nodes (2) are configured for transmitting data packets having sizes not greater than a maximum size, and wherein the duration of each priority slot (12) is moreover a function of said maximum size.

17. A node for a communication network, configured for implementing the accessing method according to any one of the preceding claims.

18. A communication network comprising a plurality of nodes according to claim 17.

19. A software product that can be loaded into a memory of a node of a communication network and is configured for implementing, when run, the accessing method according to any one of claims 1 to 16.

## Patentansprüche

1. Verfahren zum Zugreifen auf einen geteilten Kommunikationskanal eines Kommunikationsnetzwerks (1), das durch eine Mehrzahl von Knoten (2) gebildet wird, die mittels des Kommunikationskanals verbunden sind, wobei das Verfahren eine Netzwerkkonfigurationsprozedur und eine Betriebsprozedur umfasst, wobei die Netzwerkkonfigurationsprozedur die Schritte beinhaltet:
- Definieren einer Folge von Prioritätsrahmen (10), wobei jeder Prioritätsrahmen durch eine Mehrzahl von Prioritätsslots (12) gebildet ist;
- für jeden Prioritätsslot, Zuweisen eines entsprechenden Prioritätslevels zu jedem Knoten, um für jeden Knoten eine entsprechende voreingestellte Folge von Prioritätsleveln zu definieren;
- Definieren einer Folge von Kommunikationsrahmen (6), wobei jeder Kommunikationsrahmen durch eine Folge von Kommunikationsslots (8) gebildet ist, wobei jeder Kommunikationsslot zu einem korrespondierenden Prioritätsslot (12) zugehörig ist, wobei die Folgen von Prioritätsrahmen (10) in einer verteilten Weise von den Knoten (2) geteilt werden, ohne jedwede Notwendigkeit auf eine Basisstation zurückzugreifen;
- Bestimmen, für jeden Knoten, eines entsprechenden Bandanteils, Angeben eines entsprechenden Anteils eines Übertragungsbands, das zu dem Kommunikationskanal zugehörig ist; und wobei der Schritt des Zuweisens eines entsprechenden Prioritätslevels zu jedem Knoten umfasst, für jeden Prioritätsslot, Zuweisen zu jedem Knoten der unter den Knoten in Betracht gezogen wird eines entsprechenden Prioritätslevels, welcher eine Funktion des Bandanteils ist, der für den in Betracht gezogenen Knoten bestimmt wurde;
wobei die Betriebsprozedur der Netzwerkkonfigurationsprozedur nachfolgend ist und die Schritte beinhaltet:
- Detektieren (32; 94, 96, 100), durch einen ersten Knoten, eines Zustands des Kommunikationskanals während eines Detektionszeitintervalls Tg, wobei das Zeitintervall eine Funktion des Prioritätslevels ist, der zu dem ersten Knoten zugewiesen wird, wobei der Zustand entweder frei ist, in dem Fall, in dem der erste Knoten keinerlei Übertragung durch andere Knoten detektiert, oder aber besetzt ist, in dem Fall, in dem der erste Knoten eine Übertragung von zumindest einem anderen Knoten detektiert; und
- wenn der Zustand, der während des Detektionszeitintervalls Tg detektiert wird, frei ist, Zugreifen (36; 104), durch den ersten Knoten, auf den Kommunikationskanal, Übertragen eines Datenpakets.

2. Zugriffsverfahren nach Anspruch 1, wobei der Schritt des Zuweisens zu jedem Knoten, für jeden Prioritätsslot, eines entsprechenden Prioritätslevels ein Zuweisen zu jedem Knoten von Prioritätsleveln so umfasst, dass die entsprechende voreingestellte Folge von Prioritätsleveln periodisch ist.

3. Zugriffsverfahren nach einem der vorangegangenen Ansprüche, wobei das Detektionszeitintervall Tg beginnend von einem Moment eines Starts eines Kommunikationsslots, der unter den Kommunikationsslots in Betracht gezogen wird, vergeht, wobei der Übertragungsprioritätslevel, der zu den ersten Knoten (2) zugewiesen wird, der Prioritätslevel ist, der zu dem ersten Knoten in dem Prioritätsslot zugewiesen wird, der zu dem in Betracht gezogenen Kommunikationsslot korrespondiert.

4. Zugriffsverfahren nach Anspruch 3, wobei die Kommunikationsrahmen (6) und die Prioritätsrahmen (10) synchron sind.

5. Zugriffsverfahren nach Anspruch 4, wobei die Kommunikationsrahmen (6) und die Prioritätsrahmen (10) ein und dieselbe Rahmendauer aufweisen, und wobei jeder Kommunikationsslot (8) zeitlich zu dem korrespondierenden Prioritätsslot (12) ausgerichtet ist.

6. Zugriffsverfahren nach einem der vorangegangenen Ansprüche, wobei das Detektionszeitintervall Tg zudem eine Funktion einer Ausbreitungszeit ist, die zu einem maximal zulässigen Abstand zwischen zwei beliebigen Knoten unter den Knoten (2) korrespondiert.

7. Zugriffsverfahren nach Anspruch 6, wobei die Dauer eines jeden Kommunikationsslots (8) eine Funktion der Ausbreitungszeit und einer Anzahl von möglichen Prioritätsleveln ist.

8. Zugriffsverfahren nach Anspruch 7, wobei die Knoten (2) ausgebildet sind, Datenpakete zu übertragen, deren Größen nicht größer sind als eine maximale Größe, und wobei die Dauer eines jeden Kommunikationsslots (8) zudem eine Funktion der maximalen Größe ist.

9. Zugriffsverfahren nach einem der Ansprüche 1 bis 2, wobei der Schritt des Zugreifens (104) auf den Kommunikationskanal in Bezug auf die Prioritätsrahmen (10) asynchron ausgeführt wird.

10. Zugriffsverfahren nach Anspruch 9, wobei der Schritt des Detektierens (94, 96, 100) eines Zustands des Kommunikationskanals die Schritte umfasst:
- Ausführen, durch den ersten Knoten (2), einer ersten Detektion (96) des Zustands des Kommunikationskanals während einer ersten Zeit T_{f}ⁱ, wobei die erste Zeit eine Funktion des Übertragungsprioritätslevels ist, der zu dem ersten Knoten zugewiesen wird;
- Extrahieren (92), auf eine pseudo-zufällige Weise, einer zweiten Zeit aus einem Zeitfenster CWE, wobei das Zeitfenster CWE eine Funktion des Übertragungsprioritätslevels ist, der zu dem ersten Knoten zugewiesen wird;
- Ausführen (100), durch den ersten Knoten, einer zweiten Detektion des Zustands des Kommunikationskanals während der zweiten Zeit;
und wobei der Schritt des Zugreifens (104) auf den Kommunikationskanal in dem Fall ausgeführt wird, in dem der erste Knoten den Frei-Zustand sowohl während der ersten Zeit T_{f}ⁱ als auch während der zweiten Zeit detektiert.

11. Zugriffsverfahren nach Anspruch 10, des Weiteren umfassend den Schritt:
- Warten (106; 106a), durch den ersten Knoten (2), auf ein Bestätigungspaket betreffend das übertragende Datenpaket.

12. Zugriffsverfahren nach Anspruch 11, des Weiteren umfassend die Schritte:
- in dem Fall, in dem das Bestätigungspaket nicht durch den ersten Knoten (2) empfangen wird, Vergrößern (112) der zeitlichen Dauer des Zeitfensters CWE;
- in dem Fall, in dem das Bestätigungspaket durch den ersten Knoten empfangen wird, Verringern (110) der zeitlichen Dauer des Zeitfensters CWE.

13. Zugriffsverfahren nach einem der Ansprüche 9 bis 12, wobei der Schritt des Detektierens (94, 96, 100) des Zustands des Kommunikationskanals durch eine Erzeugung des Datenpakets aktiviert wird, und wobei, wenn der Zustand, der während des Detektionszeitintervalls detektiert wird, frei ist, der Schritt des Bestimmens eines Gelegenheitszeitintervalls TOⁱ und, in dem Fall, in dem ein weiteres Datenpaket innerhalb des Gelegenheitszeitintervalls TOⁱ erzeugt wird, ein Übertragen des weiteren Datenpakets ohne weiteres Detektieren des Zustands des Kommunikationskanals ausgeführt wird.

14. Zugriffsverfahren nach Anspruch 13, wobei das Gelegenheitszeitintervall TOⁱ zwischen einem Moment des Zugreifens auf den Kommunikationskanal, in dem der erste Knoten (2) auf den Kommunikationskanal zugreift, und einem Moment einer Veränderung des Prioritätslevels, der zu dem ersten Knoten zugewiesen wird, beinhaltet ist.

15. Zugriffsverfahren nach einem der Ansprüche 9 bis 14, umfassend den Schritt des Detektierens, durch den ersten Knoten (2), des Vorhandenseins des Datenpakets in einem paket-bereiten Moment; wobei der Übertragungsprioritätslevel, der zu dem ersten Knoten (2) zugewiesen wird, der Prioritätslevel ist, der zu dem ersten Knoten in dem paket-bereiten Moment zugewiesen wird.

16. Zugriffsverfahren nach einem der Ansprüche 9 bis 15, wobei die Knoten (2) ausgebildet sind, Datenpakete zu übertragen, deren Größen nicht größer sind als eine maximale Größe, und wobei die Dauer eines jeden Prioritätsslots (12) zudem eine Funktion der maximalen Größe ist.

17. Knoten für ein Kommunikationsnetzwerk, ausgebildet zum Implementieren des Zugriffsverfahrens nach einem der vorangegangenen Ansprüche.

18. Kommunikationsnetzwerk umfassend eine Mehrzahl von Knoten nach Anspruch 17.

19. Softwareprodukt, das in einen Speicher eines Knotens eines Kommunikationsnetzwerks geladen werden kann und ausgebildet ist zum Implementieren, wenn es ausgeführt wird, des Zugriffsverfahrens nach einem der Ansprüche 1 bis 16.

## Revendications

1. Procédé d'accès à un canal de communication partagé d'un réseau de communication (1) formé par une pluralité de noeuds (2) connectés au moyen dudit canal de communication, ledit procédé comprenant une procédure de configuration de réseau et une procédure d'exploitation, la procédure de configuration de réseau comprenant les étapes consistant à :
- définir une succession de trames de priorité (10), chaque trame de priorité étant formée d'une pluralité de créneaux de priorité (12) ;
- pour chaque créneau de priorité, attribuer à chaque noeud un niveau de priorité respectif de façon à définir, pour chaque noeud, une succession présélectionnée de niveaux de priorité ;
- définir une succession de trames de communication (6), chaque trame de communication étant formée d'une succession de créneaux de communication (8), chaque créneau de communication étant associé à un créneau de priorité (12) correspondant, où les successions de trames de priorité (10) sont partagées de manière répartie au moyen desdits noeuds (2), sans qu'il soit nécessaire de recourir à une station de base ;
- déterminer, pour chaque noeud, une fraction respective de bande, indiquant une fraction respective d'une bande de transmission associée au canal de communication ; et dans lequel ladite étape consistant à attribuer à chaque noeud un niveau de priorité respectif comprend, pour chaque créneau de priorité, l'attribution à chaque noeud en question faisant partie desdits noeuds d'un niveau de priorité respectif qui est une fonction de la fraction de bande déterminée pour ledit noeud en question ;
la procédure d'exploitation faisant suite à ladite procédure de configuration de réseau et comprenant les étapes consistant à :
- détecter (32 ; 94, 96, 100), par l'intermédiaire d'un premier noeud, un état du canal de communication pendant un intervalle de temps de détection Tg, ledit intervalle de temps étant une fonction du niveau de priorité attribué au premier noeud, ledit état étant alternativement libre, dans le cas où le premier noeud ne détecte pas de transmission par d'autres noeuds, ou occupé, dans le cas où le premier noeud détecte une transmission d'au moins un autre noeud ; et
- si l'état détecté pendant ledit intervalle de temps de détection Tg est libre, accéder (36 ; 104), par l'intermédiaire du premier noeud, au canal de communication, et transmettre un paquet de données.

2. Procédé d'accès selon la revendication 1, dans lequel ladite étape consistant à attribuer à chaque noeud, pour chaque créneau de priorité, un niveau de priorité respectif comprend l'attribution à chaque noeud de niveaux de priorité de telle sorte que la succession présélectionnée respective de niveaux de priorité est périodique.

3. Procédé d'accès selon l'une quelconque des revendications précédentes, dans lequel ledit intervalle de temps de détection Tg s'écoule en commençant à un instant de démarrage d'un créneau de communication en question faisant partie desdits créneaux de communication, ledit niveau de priorité de transmission attribué au premier noeud (2) étant le niveau de priorité attribué au premier noeud dans le créneau de priorité qui correspond au créneau de communication en question.

4. Procédé d'accès selon la revendication 3, dans lequel lesdites trames de communication (6) et lesdites trames de priorité (10) sont synchrones.

5. Procédé d'accès selon la revendication 4, dans lequel lesdites trames de communication (6) et lesdites trames de priorité (10) ont une seule et même durée de trame, et dans lequel chaque créneau de communication (8) est temporairement aligné au créneau de priorité (12) correspondant.

6. Procédé d'accès selon l'une quelconque des revendications précédentes, dans lequel ledit intervalle de temps de détection Tg est de plus une fonction d'un temps de propagation correspondant à une distance admissible maximale entre deux noeuds quelconques faisant partie desdits noeuds (2).

7. Procédé d'accès selon la revendication 6, dans lequel la durée de chaque créneau de communication (8) est une fonction dudit temps de propagation et d'un nombre de niveaux de priorité possibles.

8. Procédé d'accès selon la revendication 7, dans lequel lesdits noeuds (2) sont configurés pour transmettre des paquets de données ayant des tailles non supérieures à une taille maximale, et dans lequel la durée de chaque créneau de communication (8) est de plus une fonction de ladite taille maximale.

9. Procédé d'accès selon l'une quelconque des revendications 1 à 2, dans lequel ladite étape consistant à accéder (104) au canal de communication est réalisée de façon asynchrone par rapport aux trames de priorité (10).

10. Procédé d'accès selon la revendication 9, dans lequel ladite étape de détection (94, 96, 100) d'un état du canal de communication comprend les étapes consistant à :
- réaliser, par l'intermédiaire du premier noeud (2), une première détection (96) de l'état du canal de communication pendant un premier temps T_{f}ⁱ, ledit premier temps étant une fonction du niveau de priorité de transmission attribué au premier noeud ;
- extraire (92), de façon pseudo-aléatoire, un second temps d'une fenêtre temporelle CWE, ladite fenêtre temporelle CWE étant une fonction du niveau de priorité de transmission attribué au premier noeud ;
- réaliser (100), par l'intermédiaire du premier noeud, une seconde détection de l'état du canal de communication pendant ledit second temps ;
et dans lequel ladite étape consistant à accéder (104) au canal de communication est réalisée dans le cas où le premier noeud détecte un état libre à la fois pendant le premier temps T_{f}¹ et pendant le second temps.

11. Procédé d'accès selon la revendication 10, comprenant en outre l'étape consistant à :
- attendre (106 ; 106a), par l'intermédiaire du premier noeud (2), un paquet d'accusé de réception concernant le paquet de données transmis.

12. Procédé d'accès selon la revendication 11, comprenant en outre les étapes consistant à :
- dans le cas où ledit paquet d'accusé de réception n'est pas reçu par le premier noeud (2), augmenter (112) la durée temporelle de la fenêtre temporelle CWE ;
- dans le cas où ledit paquet d'accusé de réception est reçu par le premier noeud, réduire (110) la durée temporelle de la fenêtre temporelle CWE.

13. Procédé d'accès selon l'une quelconque des revendications 9 à 12, dans lequel l'étape de détection (94, 96, 100) de l'état du canal de communication est activée par une génération du paquet de données, et dans lequel, si l'état détecté pendant l'intervalle de temps de détection est libre, l'étape de détermination d'un intervalle de temps d'opportunité TOⁱ et, dans le cas où un paquet de données supplémentaire est généré pendant ledit intervalle de temps d'opportunité TOⁱ, la transmission du paquet de données supplémentaire sans détection supplémentaire de l'état du canal de communication est réalisée.

14. Procédé d'accès selon la revendication 13, dans lequel ledit intervalle de temps d'opportunité TOⁱ est compris entre un instant d'accès au canal de communication, dans lequel le premier noeud (2) accède au canal de communication, et un instant de modification du niveau de priorité attribué au premier noeud.

15. Procédé d'accès selon l'une quelconque des revendications 9 à 14, comprenant l'étape consistant à détecter par l'intermédiaire du premier noeud (2) la présence du paquet de données dans un instant où le paquet est prêt ; ledit niveau de priorité de transmission attribué au premier noeud (2) étant le niveau de priorité attribué au premier noeud dans l'instant où le paquet est prêt.

16. Procédé d'accès selon l'une quelconque des revendications 9 à 15, dans lequel lesdits noeud (2) sont configurés pour transmettre des paquets de données ayant des tailles non supérieures à une taille maximale, et dans lequel la durée de chaque créneau de priorité (12) est de plus une fonction de ladite taille maximale.

17. Noeud pour un réseau de communication, configuré pour implémenter le procédé d'accès selon l'une quelconque des revendications précédentes.

18. Réseau de communication comprenant une pluralité de noeud selon la revendication 17.

19. Produit de logiciel qui peut être chargé dans une mémoire d'un noeud d'un réseau de communication et est configuré pour implémenter, lorsqu'il est exécuté, le procédé d'accès selon l'une quelconque des revendications 1 à 16.
